Europäisches Patentamt

European Patent Office

Office européen des brevets

(11) Veröffentlichungsnummer: **0 471 330 A1**

# EUROPÄISCHE PATENTANMELDUNG

(21) Anmeldenummer: **91113559.8**

(22) Anmeldetag: **13.08.91**

(51) Int. Cl.5: **G01N 27/416**

(30) Priorität: **15.08.90 DE 4025785**

(43) Veröffentlichungstag der Anmeldung:
**19.02.92 Patentblatt 92/08**

(84) Benannte Vertragsstaaten:
**AT BE CH DE DK ES FR GB GR IT LI LU NL SE**

(71) Anmelder: **DEGUSSA AG**
**Weissfrauenstrasse 9**
**W-6000 Frankfurt (Main)(DE)**

(72) Erfinder: **Schilling, Werner, Prof. Dr.**
**Haubourden-Strasse 12**
**W-5170 Jülich(DE)**

(74) Vertreter: **Stoffregen, Hans-Herbert, Dr.**
**Dipl.-Phys.**
**Patentanwalt, Salzstrasse 11 a, Postfach 21**
**44**
**W-6450 Hanau (Main) 1(DE)**

(54) **Messeinrichtung für pH-Werte.**

(57) Die Erfindung bezieht sich auf eine Meßeinrichtung für pH-Werte mit zwei Elektroden (1, 2), die eine Substanz (6) zur Feststellung des pH-Werts eingebracht werden und die an ein die Potentialdifferenz der Elektroden (1, 2) messendes Gerät (15) anschließbar sind. Die beiden Elektroden (1, 2) enthalten zumindest an für den Kontakt mit der Substanz (6) vorgesehenen Flächen Metalloxide, die mit metallischen, gegen die Substanz elektrisch isolierten Leitern verbunden sind. Die Metalloxide der beiden Elektroden (1, 2) weisen verschieden steile Kennlinien (16, 17) der Potentiale als Funktion der pH-Werte auf.

Fig. 2

EP 0 471 330 A1

Die Erfindung bezieht sich auf eine Meßeinrichtung für pH-Werte mit zwei Elektroden, die in eine Substanz zur Feststellung des pH-Werts einbringbar und die an ein die Potentialdifferenz der Elektroden messendes Gerät anschließbar sind.

Zur Messung von pH-Werten wird vielfach die potentiometrische Methode verwendet. Es wird das Potential einer Meßelektrode gegen das einer Bezugselektrode gemessen. Das Potential an der Meßelektrode, die in die zu untersuchende Flüssigkeit eingetaucht wird, hängt vom pH-Wert dieser Flüssigkeit ab. Die Meßelektrode bildet mit der Flüssigkeit und der Bezugselektrode, deren Spannung vorgegeben ist, eine galvanische Zelle, die neben der Flüssigkeit noch mindestens eine weitere Elektrolytlösung aufweisen kann. Die beiden Elektroden sind mit einem Meßinstrument verbunden, das einen sehr großen Eingangswiderstand hat. Es wird quasi stromlos eine Kettenspannung gemessen, die sich aus mehreren Komponenten zusammensetzt, von denen eine von der Ionenkonzentration der zu untersuchenden Lösung abhängt. Die Beziehungen zwischen der entsprechenden Galvanispannung und der Konzentration läßt sich durch die Nernstsche Gleichung ausdrücken. Die Meßelektrode besteht z. B. aus einer Glaselektrode aus pH-sensitivem Membranglas, das innen mit einer definierten Pufferlösung in Kontakt steht. Die Bezugselektrode besteht z. B. aus einem Bezugselement, das sich in einer definierten Elektrolytlösung befindet, die mit der zu untersuchenden Substanz über ein Meßmedium, insbesondere ein poröses Keramikdiaphragma Kontakt hat. Die Spannung der Bezugselektrode wird durch den Bezugselektrolyt und ein Bezugselement, z.B. Silber/Silberchlorid, definiert.

Die Glaselektrode und die Bezugselektrode können als separate Teile in die zu untersuchende Lösung eingetaucht werden. Bekannt ist aber auch eine kombinierte Elektrode, bei der der Bezugselektrolyt die Glaselektrode konzentrisch umgibt. Meßeinrichtungen der oben beschriebenen Art haben einen komplizierten Aufbau. Darüberhinaus müssen Elektroden aus Glas vor starken mechanischen Beanspruchungen geschützt werden.

Der Erfindung liegt die Aufgabe zugrunde, eine Meßeinrichtung für pH-Werte zu entwickeln, die bei möglichst einfachem Aufbau in einem weiten Temperaturbereich einsetzbar ist, eine geringe Impedanz aufweist, widerstandsfähig gegen mechanische Beanspruchungen ist und eine große Langzeitstabilität hat.

Die Aufgabe wird erfindungsgemäß im wesentlichen dadurch gelöst, daß die beiden Elektroden zumindest an für den Kontakt mit der Substanz vorgesehenen Flächen Metalloxide enthalten, die verschieden steile Kennlinien der Potentiale als Funktion der pH-Werte aufweisen. Durch die Unterschiede der beiden Kennlinien treten bei den Elektroden verschiedene Potentiale auf, deren Differenz ein Maß für die Ionenkonzentration bzw. den pH-Wert ist. Die beiden Elektroden können die gleiche Form haben. Die Metalloxide können das gleiche oder verschiedene Metalle aufweisen. Eine kompliziert aufgebaute Referenzelektrode entfällt. Auch die bei unterschiedlichen Elektroden vorkommenden unterschiedlichen Lebensdauern sind bei den beiden Elektroden nicht vorhanden, wodurch eine Reihe von Schwierigkeiten vermieden werden.

Die Metalloxide sind mit metallischen, gegen die Substanz elektrisch isolierten Leitern verbunden, die ihrerseits mittelbar oder unmittelbar zu dem Gerät oder einer gleichwirkenden Einrichtung führen.

Vorzugsweise sind die Metalloxide der beiden Elektroden nach verschiedenen Herstellungsverfahren je auf einem Träger aufgebracht. Durch verschiedene Herstellungsverfahren ergeben sich unterschiedliche Steilheiten. Es können folgende Metalloxide je für eine oder für beide Elektroden verwendet werden $Sb_2O_3$, $MoO_2$, $Ta_2O_5$, $PtO_2$, $RhO_2$, $RuO_2$, $PdO$, $OsO_2$, $TiO_2$, $SnO_2$.

Besonders geeignet ist Iridiumoxid in einer hydratisierten Form für eine oder beide Elektroden. Zweckmäßigerweise ist das Iridiumoxid auf einer Elektrode durch Sputtern und auf der anderen Elektrode durch chemische Oxidation hergestellt. Bei Verwendung von Iridiumoxid ergibt sich eine geringe Redoxempfindlichkeit. Das Ruhepotential von Elektroden aus Iridiumoxid gegenüber einer üblichen Kalomel-Bezugselektrode wurde in Abhängigkeit vom pH-Wert gemessen ("Evaluation of Iridium Oxide Elektrodes Formed by Potential Cycling as pH Probes" von M. L. Hitchman and S. Ramanathan in Analyst, January 1988, Vol. 113, Seiten 35 - 39; "pH-Sensitive Sputtered Iridium Oxide Films" von T. Katsube, L. Lauks und J. N. Zemel in Sensors and Actuators, 2 (1982), 399 - 410). Die Messungen zeigen, daß die Ruhepotentiale von nach verschiedenen Verfahren hergestellten Elektroden mit Iridiumoxidschichten in einem weiten Bereich linear vom pH-Wert abhängen, jedoch unterschiedliche Steilheiten aufweisen. Dieser Effekt wird für die Schaffung einer pH-Wertmeßeinrichtung ausgenutzt, indem zwei nach verschiedenen Herstellungsmethoden erzeugte Iridiumoxidschichten mit elektrisch leitenden Elementen verbunden sind. Die Meßeinrichtung mit den beiden Iridiumoxid enthaltenden Elektroden wird mit Lösungen, die verschiedene pH-Werte haben, geeicht. Es kann auch eine Lösung verwendet werden, deren pH-Wert stetig oder in vorgegebenen Schritten geändert wird, um die Meßeinrichtung zu eichen.

Bei einer bevorzugten Ausführungsform weist die jeweilige Elektrode eine auf einem nicht löslichen, elektrisch isolierenden Substrat angeordnete Metallschicht auf, die jeweils einen von einer Schicht aus Metalloxid überzogenen, für den Kontakt mit dem Substrat bestimmten Abschnitt und einen von einem elektrisch isolierenden Überzug bedeckten Abschnitt enthält, an den im Inneren des Überzugs eine von außen kommende elektrische Leitung angeschlossen ist, die außerhalb des Überzugs mit einer Isolierung versehen ist, die sich zumindest über den in die Substanz einsetzbaren Teil der Leitung erstreckt. Bei einer derartig ausgebildeten Elektrode können keine metallisch leitenden Bereiche mit der Substanz in Verbindung kommen. Lediglich das Metalloxid steht mit der Substanz in Kontakt.

Zweckmäßigerweise besteht die Metallschicht aus Iridium, Stahl, Platin oder Titan.

Derartige Schichten haben eine ausreichende metallische, d. h. hohe Leitfähigkeit.

Das elektrisch isolierende Substrat kann insbesondere aus Glas oder Aluminiumoxid bestehen. Es wird dabei ein Glas verwendet, das nicht von sauren oder basischen Substanzen angegriffen wird. Das Aluminiumoxid ist ebenfalls gegen saure und basische Substanzen widerstandsfähig.

Der elektrisch isolierende Überzug besteht vorzugsweise aus Tetrafluorkohlenstoff (Wz: TEFLON), einem Stoff der widerstandsfähig gegen saure und basische Substanzen ist.

Besonders vorteilhaft ist eine Ausführungsform, bei der auf zwei parallelen Seiten eines plattenförmigen Substrats die Elektroden angeordnet sind. Eine derartige Meßeinrichtung hat einen besonders einfachen Aufbau, da beide Elektroden auf einem gemeinsamen Substrat angeordnet sind. Die Abmessungen einer derartigen Meßeinrichtung können gering sein. Beispielsweise hat die den zu messenden Lösungen ausgesetzte Metalloxidfläche nur 1 qmm.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines in der Zeichnung dargestellen Ausführungsbeispiels.

Es zeigen:

Fig. 1    eine Meßeinrichtung für pH-Werte mit zwei Elektroden teilweise im Querschnitt,

Fig. 2    eine Meßeinrichtung für pH-Werte mit zwei auf einem gemeinsamen Substrat angeordneten Elektroden in perspektivischer Ansicht und

Fig. 3    Kennlinien des Ruhepotentials von Metalloxide aufweisenden Eletroden als Funktion des pH-Werts.

Eine Meßeinrichtung für pH-Werte enthält zwei Elektroden (1), (2), die in einem Halter (3) im Abstand voneinander befestigt sind. Die Elektroden (1), (2) bestehen jeweils aus einem metallischen Leiter, einem Metalldraht (4), (5) oder einer Metallplatte, und Überzügen oder Schichten auf dem Leiter, dem Metalldraht bzw. der Metallplatte. Ein für den Kontakt mit einer flüssigen Substanz (6) bestimmter Abschnitt an jedem Metalldraht (4), (5) ist mit einer Schicht (7), (8) aus Metalloxid überzogen, die beispielsweise eine Stärke von 0,1 μm oder weniger hat. Im Anschluß an die Schichten (7), (8) aus Metalloxid sind die Metalldrähte (4), (5) bzw. Metallplatten mit elektrisch isolierenden Überzügen (9), (10), insbesondere aus TEFLON, versehen, die verhindern, daß metallische Leiter mit der Substanz (6) in Berührung kommen. Die Überzüge (9), (10) erstrecken sich bis zu Steckverbindern (11), (12), mit denen die Metalldrähte (4), (5) mit Leitungen (13), (14) verbunden sind, die zu einem Meßgerät (15) mit hohem, Eingangswiderstand verlegt sind. Die Metalldrähte (4), (5) bestehen insbesondere aus Iridium.

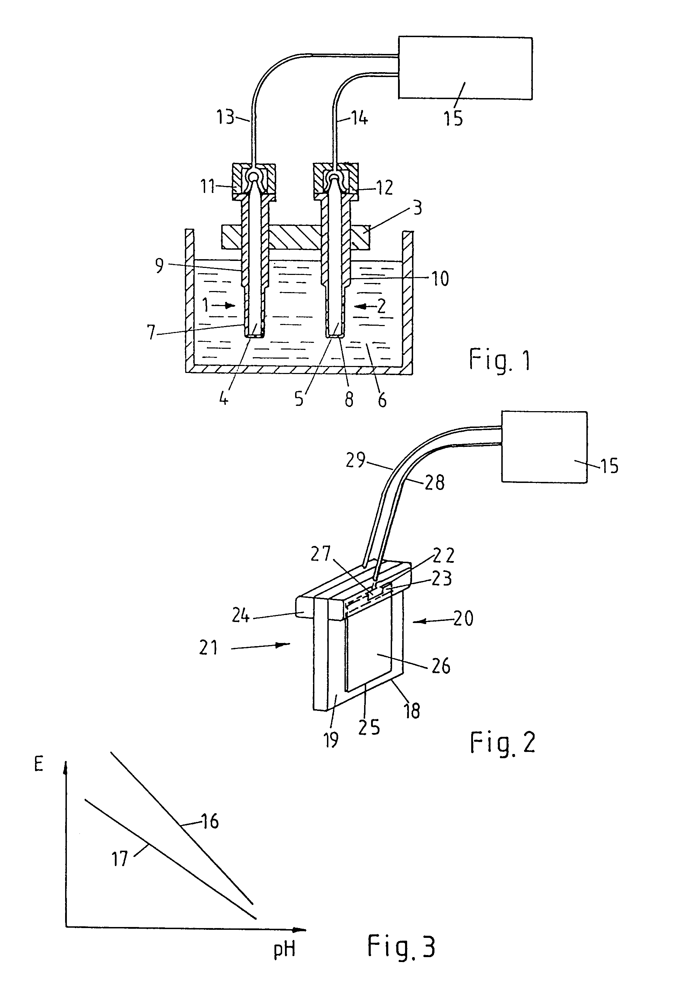

Die Schichten (7), (8) bestehen vorzugsweise aus Iridiumoxid und haben Kennlinien (16), (17) des Ruhepotentials gegenüber einer Bezugselektrode, die in Fig. 3 als Funktion des pH-Werts dargestellt sind. Die Ruhepotentiale sind in Ordinatenrichtung und die pH-Werte im Abszissenrichtung dargestellt.

Die Kennlinien (16), (17) der Metalloxidschichten (7), (8) haben unterschiedliche Steigungen, die auf unterschiedlichen Herstellungsverfahren der Metalloxidschichten (7), (8) beruhen. Die Differenzen der Ruhepotentiale, die vom Meßgerät (15) erfaßt werden, sind daher für die verschiedenen pH-Werte unterschiedlich und den pH-Werten proportional. Diese Differenzen werden deshalb für die Messung der pH-Werte ausgenutzt.

Das Meßgerät (15) und die Meßeinrichtung werden mit Hilfe von Flüssigkeiten, deren pH-Werte bekannt sind, geeicht.

Die Metalloxidschichten (7), (8) haben je jeweils eine Stärke von vorzugsweise 0,1 μm. Hierdurch ist sichergestellt, daß ein Abplatzen des Oxids von seinem Trägersubstrat unterbleibt. Größere Dicken sind selbstverständlich nicht ausgeschlossen. Nach Möglichkeit sollte die Schicht so dünn wie möglich sein.

Als Herstellungsverfahren für die Metalloxidschichten (7), (8) kommen Sputtern oder chemische Oxidation, z. B. anodische Oxidation in Frage. Die Metalldrähte (4) und (5) können aus Iridium oder einem anderen metallischen Träger bestehen.

Bei der in Fig. 2 dargestellten Meßeinrichtung für pH-Werte sind auf einem plattenförmigen, elektrisch isolierenden und in Flüssigkeiten nicht lösbaren Substrat (18) zwei Elektroden (20), (21) angeordnet, die gleich groß ausgebildet sind. Jede Elektrode (20), (21) enthält als metallischen Leiter eine auf einer Seite des Substrats (18) abgeschiedene Metallschicht (22), die sich nicht bis zu den Rändern (19) der jeweiligen Seite erstreckt. Die beiden Seiten mit den Elektroden (20), (21) verlaufen zueinander parallel. Die Metallschichten (22) enthalten je einen Abschnitt (23), der mit einer Leiste (24) aus einem elektrisch isolierenden Stoff, z. B. Tetrafluorkohlenstoff abgedeckt ist, so daß eine zu untersuchende Flüssigkeit nicht mit der Metallschicht in Berührung kommen kann. Weiterhin enthalten die Metallschichten (22) Abschnitte (25), die von einer Metalloxidschicht (26) überzogen sind, die mit den zu untersuchenden Flüssigkeiten in Berührung kommt. Die von den Leisten (24) abgedeckten Abschnitte (23) sind mit Enden (27) von Anschlußdrähten (28), (29) verbunden, deren andere Enden an das Meßgerät (15) gelegt sind.

Wichtig ist, daß nur die Oxidschichten mit der zu messenden Flüssigkeit in Berührung kommen. D.h., nur der Bereich (26) ist in Kontakt mit der Flüssigkeit.

Die Metalloxidschichten (26) erstrecken sich vorzugsweise ein Stück in die Leisten (24) hinein, wodurch eine Berührung zwischen der jeweiligen Metallschicht (22) und den zu untersuchenden Flüssigkeiten mit Sicherheit vermieden wird.

Die Metallschichten (22) bestehen vorzugsweise aus Iridium, das auf dem Substrat (18) abgeschieden wird. Eine der Metalloxidschichten (26) ist zweckmäßigerweise durch Sputtern auf der Metallschicht (22) abgeschieden. Die Herstellung dieser Metalloxidschicht (26) der Elektrode (20) kann mittels Magnetronzerstäubung eines Iridium-Targets in einer Sauerstoffatmosphäre erfolgen.

Die Metalloxidschicht der Elektrode (21) wird durch anodische Oxidation der Iridiumschicht auf dem Substrat (18) erzeugt. Dabei kann verfahrensmäßig entsprechend der Veröffentlichung "PREPARATION OF AN OXIDIZED IRIDIUM ELECTRODE AND THE VARIATION OF ITS POTENTIAL WITH pH" von Laurence D. Burke et al., Electroanal. Chem., 163 (1984) 117 -128, vorgegangen werden.

Die unterschiedlichen Herstellungsverfahren liefern Iridiumoxidschichten mit Kennlinien, die unterschiedliche Steigungen haben.

Bei Oxidelektroden, wie sie oben beschrieben sind, ist die Wertigkeit der Metallionen im hydratisierten Oxid vom pH-Wert der Lösung abhängig, in die die Elektrode eintaucht. Besonders günstige Eigenschaften hat Iridiumoxid in Form von Filmen, von denen die mittels Sputtern erzeugten Filme auch als SIROF's (Sputtered Iridium Oxid Film) bezeichnet werden. Die durch anodische Oxidation erzeugten Filme werden als AIROF's bezeichnet.

Die oben erläuterten Meßeinrichtungen sind sehr einfach aufgebaut. Der einfache Aufbau beruht wesentlich auf dem Wegfall der Kalomelelektrode. Die Meßeinrichtungen können miniaturisiert werden. Insbesondere lassen sich die Meßeinrichtungen in Planartechnik herstellen. Die Metalloxidflächen können z. B. bei der in Fig. 2 dargestellten Meßeinrichtung 1 mm² groß sein. Hieraus ergeben sich relativ kleine Abmessungen der Meßeinrichtung. Außerdem sind die Meßeinrichtungen gegen äußere Einwirkungen widerstandsfähig. Die Meßeinrichtungen arbeiten auch in einem weiten Temperaturbereich, der Temperaturen unter 0°C z. B. -20°C und über 100°C, z. B. 200°C, einschließt. Die Elektroden haben eine geringe Impedanz, was sich günstig auf die Meßgenauigkeit auswirkt. Außer Glas und Aluminiumoxid kann auch Edelstahl, Tantal oder Titan als Substrat für die Metalloxidschichten verwendet werden. Die oben beschriebenen Meßeinrichtungen haben ein sehr gutes Nernstsches Verhalten. Langzeitstabile Kennlinien lassen sich durch Alterung der Elektroden erreichen. Redox- und sonstige Fremdionenfehler z. B. aufgrund gelöster Gase sind gering. Für ein schnelles Ansprechen der Meßeinrichtung ist eine porige Oberflächenstruktur günstig.

Die Eichung der Meßeinrichtung kann mit Hilfe einer Bezugselektrode erfolgen. Da die Meßeinrichtungen keine Referenzflüssigkeiten enthalten, entfallen die von einer derartigen Flüssigkeit hervorgerufenen Nichtlinearitäten bei Temperaturänderungen. Die Meßeinrichtungen liefern daher sowohl im Tief- als auch im Hochtemperaturbereich ohne großen Aufwand gute Ergebnisse. Besonders günstig ist die Verwendung für die Messung von pH-Werten zwischen 2 und 10.

Aufgrund der Herstellung in Planartechnik und der miniaturisierten Ausbildung, können die Meßeinrichtungen besonders wirtschaftlich gefertigt werden.

Die Elektroden benötigen nach der Ausbildung des jeweiligen Oxids grundsätzlich einer Nachbehandlung nicht. Vielmehr sind sie nach ihrer Herstellung unmittelbar eisatzbereit. Um jedoch eine höhere Langzeitstabilität zu erreichen, ist ein künstliches Voraltern z.B. in einem Autoklaven möglich.

Zu erwähnen ist noch, daß die unterschiedlichen Steilheiten der Kennlinien auf unterschiedlichen Gitterstrukturen der Metalloxide beruhen. Die unterschiedlichen Gitterstrukturen ergeben sich daraus, daß die OH-Ionen in verschiedener Form in das jeweilige Gitter eingebaut werden.

**Patentansprüche**

1. Meßeinrichtung für pH-Werte mit zwei Elektroden, die in eine Substanz zur Feststellung des pH-Werts einbringbar und an ein die Potentialdifferenz der Elektroden messendes Gerät anschließbar sind,
   **dadurch gekennzeichnet,**
   daß die beiden Elektroden (1, 2; 20, 21) zumindest an für den Kontakt mit der Substanz (6) vorgesehenen Flächen Metalloxide enthalten, die verschieden steile Kennlinien der Potentiale als Funktion der pH-Werte aufweisen.

2. Meßeinrichtung nach Anspruch 1,
**dadurch gekennzeichnet,**
daß die Metalloxide der beiden Elektroden (1, 2; 20, 21) nach verschiedenen Herstellungsverfahren je auf einem Träger aufgebracht sind.

3. Meßeinrichtung nach Anspruch 2,
**dadurch gekennzeichnet,**
daß das Metalloxid auf der einen Elektrode (1; 20) durch Sputtern und das Metalloxid auf der anderen Elektrode (2; 21) durch anodische Oxidation hergestellt ist.

4. Meßeinrichtung nach Anspruch 1, 2 und/oder 3,
**dadurch gekennzeichnet,**
daß mindestens eine Elektrode (1, 2; 20,21) als Metalloxid Iridiumoxid enthält.

5. Meßeinrichtung nach Anspruch 1, 2 oder 3,
**dadurch gekennzeichnet,**
daß mindestens eine Elektrode (1, 2; 20, 21) als Metalloxid $PtO_2$, $RuO_2$, $OsO_2$, $Ta_2O_5$, $TiO_2$, $MoO_2$, $RhO_2$, $PdO$, $SnO_2$ oder $Sb_2O_3$ enthält.

6. Meßeinrichtung nach einem oder mehreren der vorhergehenden Ansprüche,
**dadurch gekennzeichnet,**
daß die jeweilige Elektrode (20, 21) eine auf einem nicht lösbaren, elektrisch isolierenden Substrat (18) angeordnete Metallschicht (22) aufweist, die jeweils einen von einer Metalloxidschicht (26) überzogenen, für den Kontakt mit der Substanz bestimmten Abschnitt (25) und einen von einem elektrisch isolierenden Überzug bedeckten Abschnitt (23) enthält, an den im Inneren des Überzugs eine von außen kommende elektrische Leitung angeschlossen ist, die außerhalb des Überzugs mit einer Isolierung versehen ist, die sich zumindest über den in die Substanz einsetzbaren Teil der Leitung erstreckt.

7. Meßeinrichtung nach Anspruch 6,
**dadurch gekennzeichnet,**
daß die Metallschicht (2) aus Iridium, Stahl, Platin oder Titan besteht und/oder das elektrisch isolierende Substrat (18) aus Glas oder Aluminiumoxid und/oder der elektrisch isolierende Überzug aus Tetrafluoräthylen besteht.

8. Meßeinrichtung nach einem oder mehreren der vorhergehenden Ansprüche,

**dadurch gekennzeichnet,**
daß auf zwei parallel zueinander verlaufenden Flächen eines plattenförmigen Substrats (18) die Elektroden (1,2; 20,21) oder diese zueinander beabstandet auf einer gemeinsamen Fläche eines zumindest gegenüber den Elektroden isolierten Trägers angeordnet sind.

9. Meßeinrichtung nach zumindest einem der vorhergehenden Ansprüche,
**dadurch gekennzeichnet,**
daß die Dicke des Metalloxids in etwa 0,1 $\mu$m beträgt.

10. Meßeinrichtung nach zumindest einem der vorhergehenden Ansprüche,
**dadurch gekennzeichnet,**
daß die Elektroden (1, 2; 20, 21) künstlich gealtert sind.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | ANALYST, Band 113, Januar 1988, Seiten 35-39; M.L. HITCHMAN et al.: "Evaluation of iridium oxide electrodes formed by potential cycling as pH probes" * Zusammenfassung; Figur 8 * | 1,4 | G 01 N 27/416 |
| A | PATENT ABSTRACTS OF JAPAN, Band 7, Nr. 192 (P-218)[1337], 23. August 1983; & JP-A-58 92 948 (HITACHI) 02-06-1983 * Gesamtes Dokument * | 1 | |
| A | PATENT ABSTRACTS OF JAPAN, Band 10, Nr. 374 (P-527)[2431], 12. Dezember 1986; & JP-A-61 167 854 (MURATA) 29-07-1986 * Gesamtes Dokument * | 1,7 | |
| A | US-A-4 287 027 (TOSK) * Zusammenfassung; Spalte 4, Zeilen 18-26; Figur 1 * | 1,5 | |
| A | DE-A-1 796 325 (CONTINENTAL OIL) * Anspruch 1 * | 1,5 | |

RECHERCHIERTE SACHGEBIETE (Int. Cl.5)

G 01 N

Der vorliegende Recherchenbericht wurde für alle Patentansprüche erstellt

| Recherchenort | Abschlußdatum der Recherche | Prüfer |
|---|---|---|
| Den Haag | 13 November 91 | KEMPF G.V. |